# EUROPEAN PATENT APPLICATION

(11) **EP 4 607 023 A1**
(43) Date of publication of application: **27.08.2025**
(21) Application number: 23879263.4
(22) Date of filing: 29.09.2023
(51) Int. Cl.: F03B 13/14, F03B 13/18, F03B 13/20, F03B 13/22

(54) **ELECTRICITY GENERATING DEVICE USING WAVE FORCE**

(30) Priority: 18.10.2022 ES 202231707 U
(71) Applicant: Renewable Ocean Energy, S.L., 07009 Palma (Illes Balears) (ES)
(72) Inventor: PIEDRA MAÑES, Yolanda, 07009 Palma (Illes Balears) (ES); CAÑELLAS FERNANDEZ, Juan Antonio, 07009 Palma (Illes Balears) (ES); BAUTISTA PARDO, Maria Del Carmen, 07009 Palma (Illes Balears) (ES)
(74) Representative: Espiell Gomez, Ignacio
(86) International application number: PCT/ES2023/070580
(87) International publication number: WO 2024/084114

(57) **Abstract**

The present invention relates to an electricity generating device using wave force that comprises a turbine comprising a bladed propeller (7) connected through a hub (4) to a transmission spindle (1) and an assembly element (20) that actuates a generator (25) of an electronic power system, said propeller and said spindle (1) being housed inside a hollow body through which the waves flow, causing both the ascending and descending thrust to rotate the blades (7). The hollow body is a bell-shaped buoy (16) that is incorporated in an auxiliary support structure (17) to secure the assembly to a breakwater or similar. The device is further characterised in that the spindle (1) is housed inserted in a main vertical shaft (2) that forms the joining link between the elements of the propeller located in the lower area of the buoy and the assembly element (20) located in the upper portion or head of the buoy (16) where they are coupled to the generator (25) and other elements of the power electronics with a multiplier (26) arranged therebetween.

## Description

### OBJECT OF THE INVENTION

The invention, as stated in the introduction of this descriptive memory, pertains to an electricity-generating device that harnesses the power of sea waves, providing advantages and features for its intended function that are described in detail later and represent an improvement over the current state of the art.

The object of the present invention pertains to a type of electricity-generating device that harnesses the power of waves to move a propeller with blades, which, associated with a spindle linked to a transmission system, transmit their movement to an electronic power system. A notable feature, among others, is that the propeller and spindle are housed within a bell-shaped buoy with a lower floating ring, integrated into a mobile structure that allows the entire unit to be secured to a breakwater. This advantageously reduces the surface impact of the waves and distributes it across its surface, enabling the buoy to be fully raised or submerged, as the elements of the electronic power system are housed in a watertight box suitable for withstanding water pressure.

### SCOPE OF APPLICATION OF THE INVENTION

The field of application of this invention falls within the sector of the industry dedicated to the manufacture of apparatus, systems, and devices for generating electrical energy, focusing particularly on those designed for harnessing the power of sea waves.

### BACKGROUND OF THE INVENTION

In the current state of the art, numerous devices and apparatus are known that are designed to harness the power of waves to generate electrical energy. In general, these devices involve a turbine with blades that rotate with the force of the waves and transmit the movement to a generator linked to them through a transmission system. However, not all designs optimise this force.

Thus, document ES2395688 describes a hydraulic turbine with tilting blades for the bidirectional use of flows, which is essentially based on a rotating runner on its axial axis, which allows it to work in both directions of operation, incorporated in a cylindrical housing, and to which multiple blades are attached by means of a radially rotating shaft with a tilting movement that allows its angle to be varied according to the direction of flow, either by the force of the fluid itself or with a mechanism that actively regulates its passage, such as computer-driven servomotors. Optionally, it incorporates guide vanes (7) at the inlet and outlet, linked to a pivot axis (8) with a tilting motion that allows for variation in their pitch angle, and a diffuser (9), conical or toroidal, to minimise load losses.

According to document WO2014041232, there is also a known system for generating wave energy which, in this case, is based on a collector that includes: a lower opening giving access to a resonant chamber and a turbine with pivoting blades, with said turbine arranged concentrically at the mouth of the collector and connected to a generator.

However, although functionally speaking these systems resemble the operating principle of the device subject of this invention, since they work in such a way that the propellers rotate to harness both upward and downward thrust within a tubular body, there are significant technical and structural differences that distinguish them. These differences allow for an optimisation of this operation, which in turn results in an optimisation of the generator's performance to produce electrical energy from harnessing the power of the waves.

Specifically, one of the main structural differences that enhance the performance of the invention's device compared to the known ones is the configuration of the body in which the propeller is housed. Additionally, the configuration of the air chamber, which eventually provides flotation to the body, also plays a relevant role in facilitating a Venturi effect at the water inlet, accelerating the fluid force over the propeller. Finally, the device's capability to be completely submerged, including the electronic components, without being affected by moisture and potential pressure, is significant.

Thus, at least from the applicant's perspective, the existence of any other device for generating electricity through wave power is unknown, nor is there any other invention with a similar application that possesses technical and structural characteristics identical or similar to those claimed here.

### EXPLANATION OF THE INVENTION

The electricity-generating device using wave power proposed by the invention is configured as the alternative solution that enhances the current knowledge in this field, with the characteristic details that make it possible and distinguish it conveniently included in the final claims accompanying this description.

Specifically, as previously mentioned, the invention proposes an electricity-generating device that harnesses the power of waves. It comprises a bladed propeller associated with a spindle linked to a transmission system, which drives a power electronic system generator. This device, incorporating the propeller inside a hollow body that forms a turbine through which waves flow, allows the blades to rotate and utilise both the upward and downward thrust. It features a series of enhancements and refinements that optimise its performance compared to other known systems, as previously cited.

More specifically, according to an essential characteristic of the device in question, the hollow body in which the propeller and the spindle with the transmission system are incorporated, defining the turbine, is a bell-shaped buoy. As a result, unlike other known systems where the turbine's body is cylindrical and thus more exposed to wave impact, in this case, the conical surface significantly reduces the surface impact by distributing it better towards the posterior supports to which the buoy is attached.

Moreover, in the preferred embodiment, the bell-shaped buoy includes a hollow ring on its lower edge that defines an air chamber, acting as a float to enhance the Venturi effect as water enters through the lower mouth of the buoy, where the propeller is located, thus increasing the fluid's acceleration precisely at the propeller section.

Furthermore, according to another additional feature of the invention, the turbine of the device is capable of being completely submerged, including the power electronics components, thanks, on the one hand, to the vertical mobility of the auxiliary structure on which the buoy and the turbine's functional elements are supported, and especially, thanks to the incorporation of all the power electronics system components, which logically cannot get wet, in the turbine's head housed in a watertight box specially designed to withstand pressure and prevent any water leakage, a feature not considered in existing equipment until now.

Moreover, following the specific features of the invention, it is worth highlighting that the buoy has an upper and a lower mesh structure that, in addition to reinforcing it, serve to ensure that the main shaft of the propeller through which the spindle passes, transmitting the movement to the transmission system, cannot become misaligned with respect to the centre of the buoy and, at the same time, to reduce the vibration of the propeller and its hub during the rotation of the blades.

Finally, according to another additional feature of the invention's device, the blades of the propeller, which are reduced to just eight, thereby allowing for reduced vibrations within the assembly, as well as lowering manufacturing and maintenance costs compared to other known systems that require a greater number of blades to operate, have been designed to be easily detachable independently and, consequently, to be easily replaceable. This, in turn, reduces the issues of power loss in the turbine due to blade deformations from fatigue when they are not replaced.

### DESCRIPTION OF THE DRAWINGS

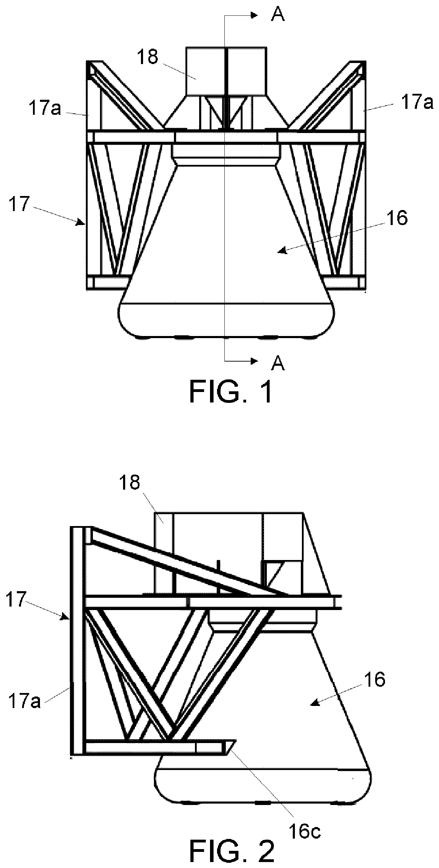

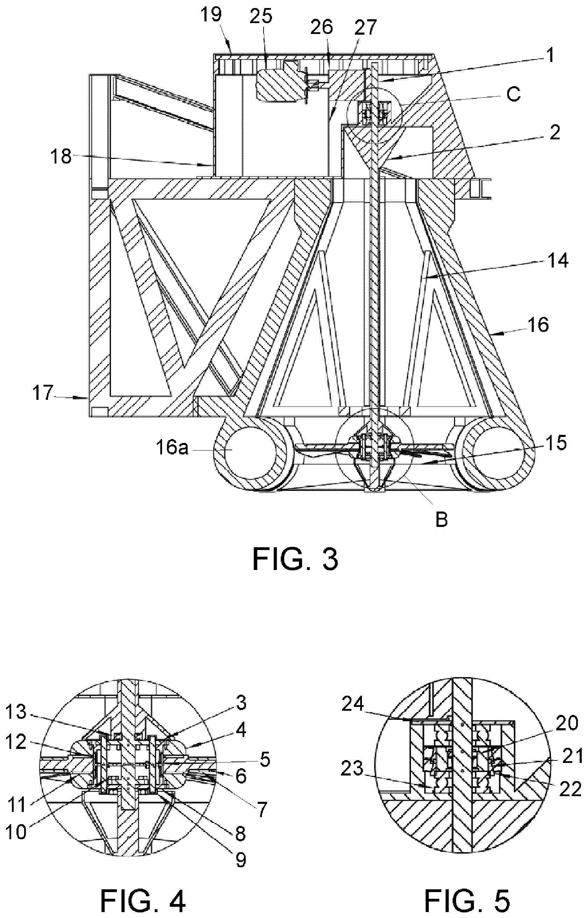

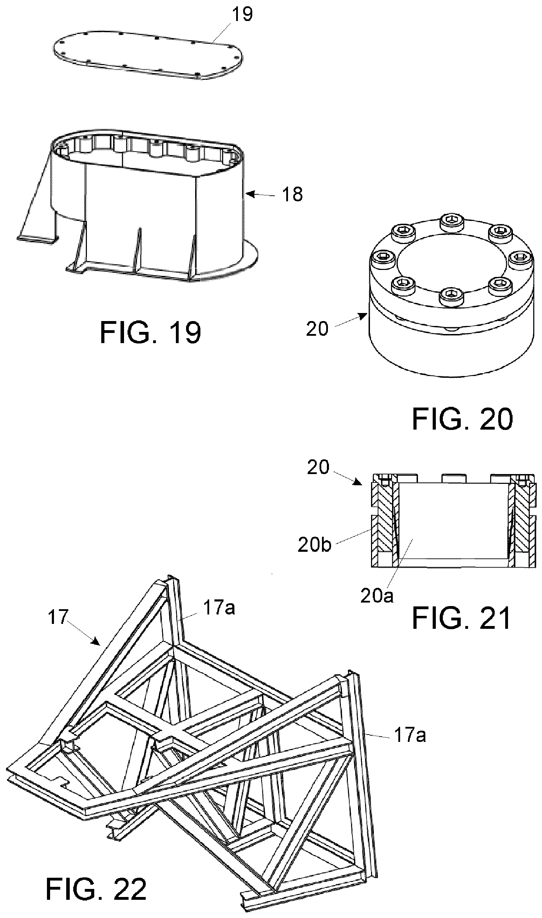

To complement the description being made and with the aim of helping to better understand the characteristics of the invention, this descriptive memory is accompanied, as an integral part of it, by a set of drawings in which, for illustrative and non-limiting purposes, the following has been represented:
Figures number 1 and 2.- Present, respectively, front and side elevation views of an example of the electricity-generating device of the invention, illustrating its general external configuration;
Figure number 3.- Shows a sectional view of the device, according to the cut A-A indicated in figure 1, displaying its internal configuration and main components;
Figure number 4.- Shows an enlarged view of detail B indicated in figure 3, where the main elements of the propeller or the driving system of the device can be seen;
Figure number 5.- Shows an enlarged view of detail C indicated in the same figure 3, where the main elements of the device's transmission system can be seen;
Figure number 6.- Shows a perspective view of the spindle;
Figure number 7.- Shows a perspective view of the main shaft.
Figure number 8.- Shows a perspective view of the assembled drive and transmission system;
Figure number 9.- Shows a perspective view of the upper plate and the propeller hub cover;
Figure number 10.- Shows a perspective view of the hub.
Figure number 11.- Shows a perspective view of the cam used to hold each blade of the propeller;
Figure number 12.- Shows a perspective view of the blade shaft;
Figure number 13.- Shows a perspective view of one of the propeller blades;
Figure number 14.- Shows a view of the assembly set of blade, spindle, hub, and cam, represented uncoupled;
Figure number 15.- Shows a perspective view of the upper mesh structure of the buoy;
Figure number 16.- Shows a perspective view of the lower mesh structure of the buoy;
Figure number 17.- Shows a perspective view of the buoy, depicted not attached to the support structure;
Figure number 18.- Shows a view of the interior framework of the buoy;
Figure number 19.- Shows a perspective view of the watertight box housing the power electronics components, along with its corresponding cover;
Figure number 20.- Shows a perspective view of the transmission system assembly ring.
Figure number 21.- Shows a sectional view of the assembly ring shown in figure 19; and
Figure number 22.- Shows a perspective view of the device's mobile auxiliary structure.

### PREFERRED VERSION OF THE INVENTION

In view of the described figures, one can observe in them a non-limiting example of the realisation of the electricity-generating device using the power of the waves of the invention, which comprises what is detailed below, in accordance with the numbering adopted to indicate each element according to the following list of numerical references:
(1) spindle
(2) main vertical axis
(3) upper hub plate
(4) hub
(5) cam
(6) blade shaft
(7) blades
(8) lower hub cap
(9) long disc bolts
(10) short bolts
(11) radial bearings
(12) coaxial
(13) sealed radial bearing
(14) upper mesh structure
(15) lower mesh structure
(16) buoy
(17) auxiliary support structure
(18) watertight box
(19) watertight box cover
(20) assembly element
(21) support disc
(22) radial bearing
(23) axial bearing
(24) tollok cap
(25) generator
(26) multiplier
(27) power electronics supports

Thus, as observed in the aforementioned figures, the device (1) of the invention is essentially composed of a turbine that includes a propeller with blades (7) that, connected through a hub (4) to a transmission spindle (1) and an assembly element (20), drive a generator (25) of a power electronic system. This propeller and spindle (1) are housed inside a hollow body through which the waves flow, rotating the blades (7) and utilising both the upward and downward thrusts. Notably, this hollow body is a bell-shaped buoy (16), incorporated into an auxiliary support structure (17) that allows the assembly to be fixed to a breakwater or similar structure. Here, the spindle (1) is housed inserted within the hollow interior of a main vertical shaft (2) which creates the connecting link between the propeller elements situated in the lower area of the buoy (16) and the assembly element (20) located at the top or head of the buoy (16) where they are coupled to the generator (25) and other power electronics elements, featuring a gearbox (26) interposed.

Thus, in order to capture the energy of a wave, its height and speed must be sufficient to exert a force on the blades (7) of the propeller, which in turn transform this hydraulic movement into a rotating mechanical movement. The rotating movement is transmitted directly to the hub (4), which holds the blades (7).

The blades (7), preferably, rotate about their axis by 30 degrees to enable the maintenance of the propeller's rotation both during the upward and downward movement of the water.

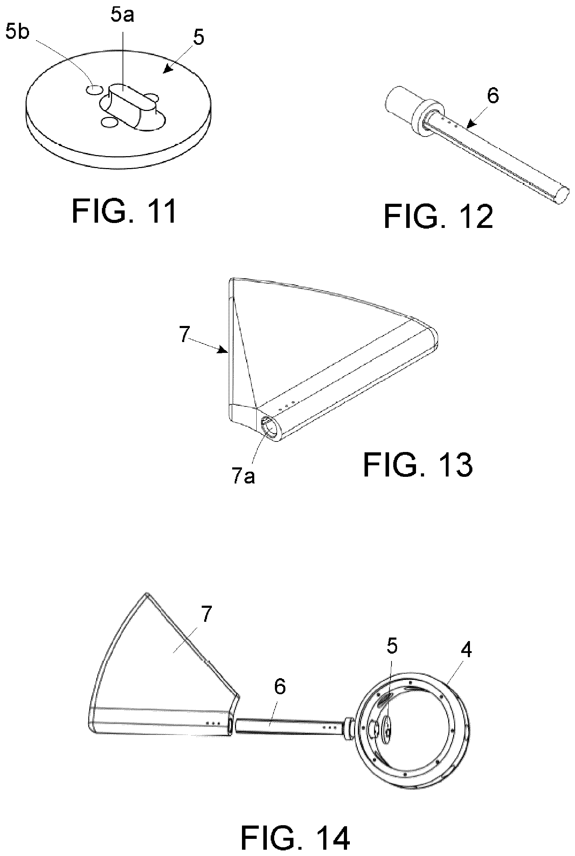

Preferably, to attach the blades (7) to the hub (4) without resistance or friction, a shaft (6) is incorporated, onto which the blade (7) is screwed at one end, while the other end is inserted into the hub (4) with two radial bearings (11). Moreover, the shaft (6) is fixed on the inside of the hub (4) by adding a cam (5) screwed onto the shaft itself and a coaxial bearing (12) between the hub (4) and the cam (5), as clearly shown in figures 11 to 14.

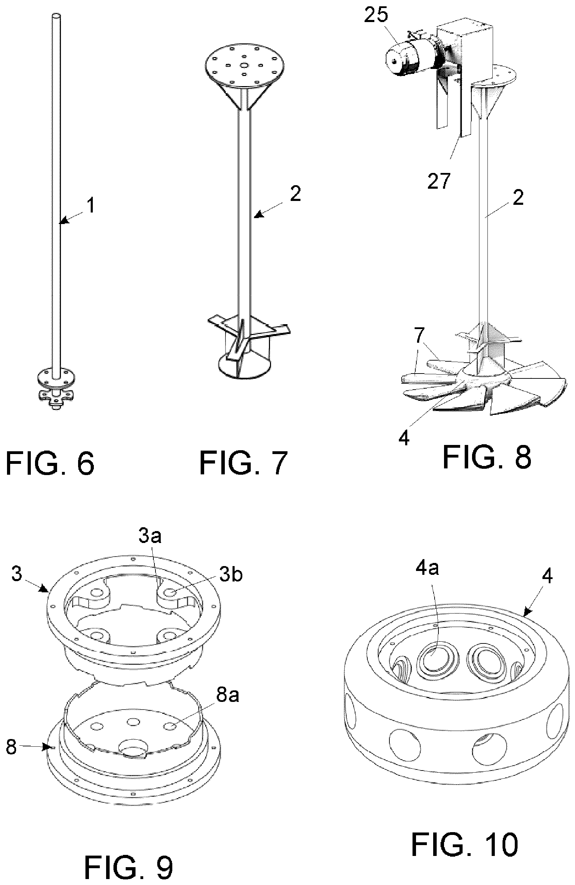

To restrict the 30-degree movement of the blades (7) in the preferred embodiment of the invention, the cam (5) features a projection (5a) that, upon rotating, collides with guides formed by an upper plate of the hub (3) and a lower hub cover (8), both screwed to the hub (4), acting as a stop. Figure 9 illustrates the configuration of these components (3, 8).

In turn, the transmission of torque from the hub (4) to the spindle (1) is preferably carried out by means of a bolted connection at two points on the spindle (1) itself with the aforementioned upper plate (3) and hub cover (8). Specifically, by means of four long disc bolts (9), which pass through the hub (4) and secure the vertical and rotational movement with the top plate (3), and another four short bolts (10) that secure the same movement on the lower hub cover (8), all of which can be unscrewed from the base to facilitate the complete removal of the hub (4) from below. This set of elements constitutes the driving system of the device, which can be seen in the detail of figure 4, where it is also possible to see the existence of a sealed radial bearing (13) located between the spindle (1) and the vertical axis (2).

In the transmission system, to hold the spindle (1) vertically, the device includes a tollok-type assembly ring (20) with a support disk (21) enveloped in respective radial (22) and axial (23) bearings to ensure fixation in all planes, guaranteeing minimal rotational loss. Furthermore, preferably, the spindle (1) is incorporated within a hollow main shaft (2) which, in addition to providing greater resistance to the spindle rod, maintains perfect alignment from the hub (4) to the top of the assembly (figure 5).

Furthermore, at the upper section of the spindle (1), the device incorporates a multiplier (26) with a change of orientation from vertical to horizontal (to utilise space more effectively), which is responsible for increasing the revolutions per minute of the spindle's (1) rotation.

In turn, the rotation of the horizontal shaft emerging from the said multiplier (26) is transmitted with a faster torque to an associated generator (25), which is responsible for transforming mechanical energy into electrical energy. It is worth noting that all the power electronics elements are secured using specific brackets (27) designed for the purpose. In Figure 8, the assembled drive and transmission system can be seen.

As previously mentioned, the described elements of the turbine are isolated and protected from the impact of sea waves by the bell-shaped buoy (16) in which they are enclosed, since the bell shape prevents the waves from striking directly and facilitates the distribution of loads across the entire exterior surface.

Preferably, this buoy (16) is equipped with a lower float (16a), which consists of a hollow ring on its lower perimeter edge that defines an air chamber, reducing the overall weight of the assembly and, in turn, decreasing the vertical loads on the auxiliary support structure (17) holding the buoy (16).

The lower float (16a), consisting of a ring at the bottom of the bell-shaped buoy (16), redirects the water upwards and acts as a hydraulic accelerator at the inlet of the buoy (16).

It should be noted that, when the waves reach a height and force greater than the maximum working range established, in order to avoid jeopardising the integrity of the unit, the entire turbine is submerged under water, away from the waves and other dangers. For this purpose, the auxiliary support structure (17) to which the buoy (16) is attached is movable in an ascending and descending vertical direction.

Preferably, this auxiliary support structure (17) incorporates guides screwed to the breakwater, within which wheels (not visible in the figures) slide, directly attached to the structure, so that the assembly can be detached from the breakwater and move vertically. Preferably, to raise or lower the buoy (16) to a certain height, there is a motorised system placed on top of the breakwater (not shown in the figures), which coils or uncoils a braided tensioning cable attached to the structure (17) of the buoy (16). To secure the height position and not burden the said tension cable, the structure (17) features a horizontal anchorage that ensures its vertical fixation on the breakwater once the desired height is reached.

Preferably, to allow the turbine to be fully submerged without its electronic components suffering water damage, at the top of it, where all the power electronics are located, including the gearbox (26) and generator (25), a watertight box (18) is provided in which these elements are completely protected and isolated from moisture. Preferably, this box (18) is made of steel and features a top cover (19) to allow access to these components, with IP68 insulation ensuring complete watertightness during immersion.

In turn, at the lower end of the main shaft (2), a sealed radial bearing (13) is incorporated to increase the watertightness in the spindle (1) and reduce friction.

Preferably, the spindle (1), which is the main torque transmission element of the assembly, as it connects the hub (4) assembly of the propeller at the bottom with the power electronics at the top, is made of stainless steel.

Preferably, the main shaft (2), which is responsible for keeping the spindle (1) aligned with the hub (4) and reducing radial loads to prevent the bending of the spindle (1), is also made of stainless steel.

Figure 9 shows how the upper plate (3) of the bushing and the lower bushing cover (8) are two parts that fit together respectively above and below the bushing (4), on the one hand, to delimit the angle of rotation of the shafts (6) of the blades (7) at 30 degrees by defining an internal guide in the bushing (4) and, on the other hand, to serve as a support for the union between the bushing (4) and the spindle (1) by means of the respective bolts (9, 10), for which the upper plate (3) has projections (3a) with holes (3b) that are aligned with perforations (8a) of the cover (8) allowing the bolts (9, 10) to be fitted. Preferably, both pieces (3, 8) are made of stainless steel.

Regarding figure 10, the annular configuration of the hub (4) can be observed. The bushing (4) is the connecting link between the blades (7) and the spindle (1). Its main function is to serve as the framework for all the components of the drive assembly or propeller, composed of the blades (7), the blade axes (6), the cams (5), the top plate (3) of the hub, the hub cover (8), and all secondary elements such as the radial bearings (11) and coaxial bearings (12) for the blades (7), as well as all the fastening hardware, protecting them and providing support for securing them. Preferably, this annular-shaped piece, with a series of through holes (4a) distributed radially for the insertion of the shafts (6) of each blade (7), preferably eight, is made of steel, as it must meet the requirements for chip removal manufacturing while simultaneously maintaining corrosion resistance characteristics.

Referring to Figure 11, the configuration of one of the cams (5) can be observed, which, as can be seen, is a circular piece with a protrusion (5a) on one of its faces. This component is the smallest within the drive system or propeller, and it is responsible for individually attaching the spindle (6) of each blade (7) to the hub (4) without coming into direct contact with the hub (4) due to the interposition of a coaxial bearing (12) in the direction of the fixing force, which ensures correct alignment of the spindle-blade connection. The protrusion (5a) of the cams (5) constitutes the lever that acts as a stop in conjunction with the guide defined by the plate (3) and cap (8) of the hub (4), thus limiting the rotation of the shaft (6) to 30 degrees.

The torque of the shaft-paddle-cam assembly (6,7,5) requires the use of a high tenacity material, resistant to fatigue against a high number of cycles and, at the same time, resistant to corrosion due to salt water seepage, and therefore, preferably, this assembly is made of a stainless steel alloy. In addition, a synthetic element is preferably inserted to cushion the impact of the projection (5a) of the cam (5) with the plate (3) and cover (8) of the hub (4). The shaft (6) of the blade, as illustrated in Figure 12 is the supporting piece for the blade (7), connecting it to the hub (4) and enabling it to rotate according to the upward or downward force of the waves. In order to perform this rotational movement, it is necessary that it is not hindered by the friction of the shaft (6) with the hub (4). Therefore, preferably, two radial bearings (11) are incorporated at the entrance of the hole (4a) of the hub (4) where the shaft (6) is inserted, similar to the bearing (12) described for the cam (5). Preferably, the material of this shaft (6) is also a stainless steel alloy with high resistance to bending and corrosion.

Regarding the blade (7), visible in Figure 13, it is the main part of the turbine's propeller. Its size and shape largely define the capacity for transforming hydraulic energy into mechanical energy. The blade (7) is directly connected to the spindle (6), which runs through the entire blade inserted in a designated slot (7a) on one side, secured with bolts and keyways that prevent the blade (7) from rotating in relation to the spindle (6).

To facilitate the absorption of the vertical thrust of the water and its consequent transformation into a rotational movement, it is necessary for the blades to occupy the largest possible area of the space through which the water passes and for the material to be lightweight. The bending stresses and cycles must also be taken into account to prevent breakage due to fatigue. Therefore, preferably, the blades (7) are made of a composite material of fibreglass and an internal core of metal sheet. In Figure 14, the blade (7), spindle (6), and cam (5) assembly alongside the hub (4) is observed as they are being joined together.

As mentioned above, the bushing (4) is connected to the spindle (1) by means of four long disc bolts (9), which cross the bushing (4) and fix the vertical and rotational movement with the upper plate (3), and four short bolts (10) which fix it with the lower cover (8) of the bushing, all of which can be unscrewed from below.

Thus, the disc bolts (9) are responsible for transmitting the rotational movement from the hub (4) to the spindle (1), and are therefore subjected to high shear stress (due to the difference in inertia between the hub and the spindle) and, in turn, to tensile stress (due to the pre-tensioning). It is therefore preferably made of stainless steel and is considered a consumable to be replaced when clear deformations are observed in the shear section or thinning of the section due to tensile fatigue. The nut heads are located at the top and welded directly to the stem of the disc bolt, while the lower nuts are the ones that are pre-tensioned. The short bolts (10) are, for their part, standardised stainless steel bolts.

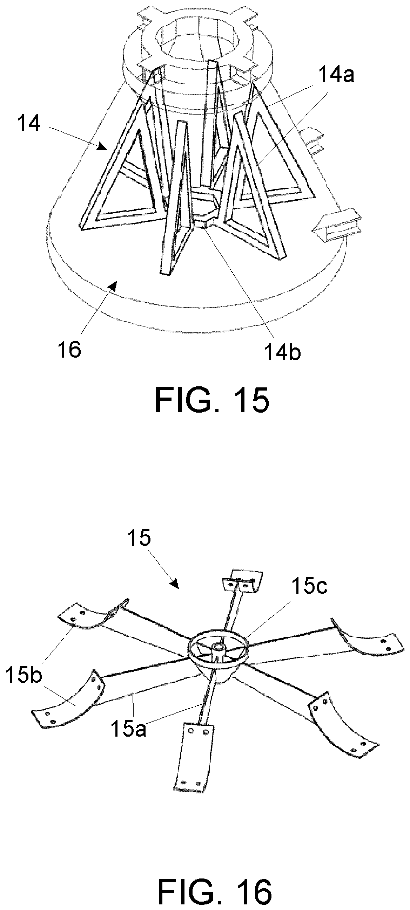

Referring to figures 15 and 16, one can see the upper mesh structure (14) and lower mesh structure (15) that the buoy (16) has in the preferred embodiment, serving as reinforcement for it. Specifically, the function of the upper mesh structure (14), composed of a plurality of brackets (14a) arranged radially beneath the bell-shaped surface of the buoy (16) surrounding a central ring (14b) to which they are attached, as shown in figure 15, is to provide greater strength to the buoy (16) and to reduce potential deformations caused by the impact of the sea. Furthermore, it is also responsible for anchoring the main vertical shaft (2), into which the spindle (1) is incorporated, to the buoy (16), through the aforementioned central ring (14b), thus ensuring the spindle (1) is properly aligned with respect to the hub (4) and the upper watertight box (18) entry; and reducing possible bending stresses on the spindle (1).

This upper mesh (14), although it is a structural element, due to its partial contact with seawater, is preferably made from high-quality stainless steel to eliminate potential corrosion damage.

In any case, the upper mesh (14) is directly connected to the inner framework (16b) of the buoy (16), which is described later, by welding to ensure the uniformity of the assembly that constitutes the buoy (16).

The lower mesh structure (15), as shown in figure 16, preferably comprises a plurality of cross-shaped arms (15a) attached at their distal end to the ring (16a) on the lower edge of the buoy (16) via respective curved plates (15b), and at their proximal end to a central circular element (15c) which, in turn, is connected to the lower part of the vertical shaft (2).

This lower mesh (15) is directly bolted to the bottom of the buoy (16) and its function, like that of the upper mesh (14), is to align the spindle (1) and also to prevent the spindle (1) from moving vertically. The spindle (1) is equipped, as previously described, with a tollok assembly ring (20) to prevent vertical movements, but with torque, it may become displaced; hence the importance of having an element that acts as a support in case of failure. Preferably, the lower mesh structure (15) is also made of stainless steel.

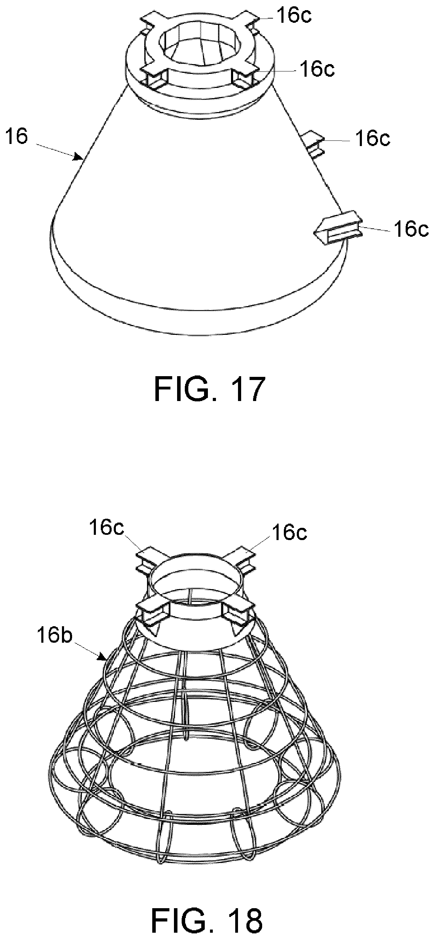

Referring to Figures 17 and 18, it is observed how, preferably, the bell-shaped buoy (16) has an internal framework (16b) that, at the lower edge, defines the floating ring chamber (16a). The buoy (16) is the main protective element of the turbine, as its bell-shaped configuration shields against the force of the sea, directs water vertically, reduces weight with the help of this float (16a), and ensures the correct connection among all other components of the turbine assembly, effectively constituting the turbine's casing.

The buoy (16) is preferably made of reinforced concrete with the aforementioned internal framework (16b) that gives the material strength and serves as a support for the parts that are welded directly to the structure. Preferably, it is shotcrete with glass fibres, which provides greater resistance to thermal variations, offers ductility and tenacity, preventing deformation and cracking. It also features enhanced impermeability, reduces weight, and requires fewer maintenance interventions. Specifically, on the upper part of the buoy (16) and on the external face of the buoy (16), there are anchors (16d) suitable for attaching it to the auxiliary structure (17) used to secure it to the breakwater.

The auxiliary structure (17), shown in figure 22, is the component of the device responsible for raising and lowering the turbine to adjust it to sea level or protect it from waves. It is a mobile structure equipped with holding guides (17a) that are directly anchored to the breakwater, wheels (not shown) incorporated into the auxiliary structure (17) that travel within the aforementioned guides, a motorised system (not represented) responsible for raising or lowering the assembly using tension cables, and finally, a vertical fixing system to prevent the entire load from being transferred to these cables.

Regarding the turbine head, as shown in figure 19, as previously mentioned, it features a watertight box (18) with its corresponding top cover (19), where all the turbine's power electronics are housed and protected, allowing it to be submerged without issue. This box, in addition to housing said electronic elements, is a base for screwing in the main vertical shaft (2) and as a support for the spindle (1). It also has the function of dissipating the temperature generated by both the generator motor (25) and the other internal components.

The top cover (19) of the box (18) allows access to its interior while also providing watertightness through the incorporation of a synthetic seal, positioned around the joint between the edge of the box (18) and the cover (19), and several vertical bolts that ensure that, despite upward air pressure, once the buoy (16) is submerged, the components remain isolated with IP68 protection. Preferably, the cover (19) is equipped with central reinforcements to prevent bulging.

Figures 20 and 21 show the configuration of the assembly ring (20). Preferably, this ring is a tollok, consisting of a piece that functions as a radial clamping ring, capable of exerting a radial compressive force on the inner ring (20a) and a tensile force on the outer ring (20b), allowing for the fixation of both coaxial and radial movement by torque. This allows the spindle (1) to be attached to a cylindrical piece or tollok support (21), which is in turn surrounded by radial bearings (22) and coaxial bearings (23), all enclosed in a hollow cylinder of the watertight box (18) with a tollok cover (24), as shown in detail in Figure 5.

The function of the described assembly with the assembling ring (20) is to secure the movement of the vertical axis of the spindle (1) and all the components mounted on it. To prevent water from entering through the opening of the watertight head and the spindle (1), a synthetic gasket is also incorporated under the ring (20).

Finally, the multiplier (26) is the first element that comes into play in the assembly; it is responsible for capturing the angular speed of the spindle (1) (via a vertical gear) and subsequently, through a set of cylindrical and bevel gears, increasing the number of revolutions per minute and redirecting the rotation by changing the system from vertical to horizontal.

On the other hand, through another assembly, the multiplier (26) is connected to the generator (25) where the exchange of mechanical to electrical energy will take place.

These two components are incorporated into a support (27) that is, preferably, made of galvanised steel, to which they are welded.

Having sufficiently described the nature of the present invention, as well as the manner of putting it into practice, it is not considered necessary to make its explanation more extensive for any expert in the field to understand its scope and the advantages derived from it.

## Claims

1. Electricity-generating device powered by wave force which, comprising a turbine that includes a propeller with blades (7) associated through a hub (4) with a transmission spindle (1) and an assembly element (20) that drives a generator (25) of an electronic power system, with said propeller and said spindle (1) housed inside a hollow body through which the wave flows, rotating the blades (7) by both upward and downward thrusts, is **characterised in that** said hollow body is a bell-shaped buoy (16) that is incorporated into an auxiliary support structure (17) to attach the assembly to a breakwater or similar, and because the spindle (1) is accommodated inserted in a main vertical shaft (2) that forms the connecting link between the propeller elements located at the lower part of the buoy and the assembly element (20) located at the top or head of the buoy (16) where they are coupled to the generator (25) and other elements of the power electronics with the interposition of a gearbox (26).

2. Electricity-generating device using wave power, according to claim 1, **characterised in that** the buoy (16) features a lower float (16a), defined by a hollow ring at its lower peripheral edge which forms an air chamber, reducing the weight of the entire assembly, decreasing the vertical loads on the auxiliary support structure (17), and redirecting the water upwards, acting as a hydraulic accelerator at the buoy's (16) inlet.

3. Electricity-generating device powered by wave energy, as per claim 1 or 2, **characterised in that** the turbine head features a watertight box (18) with an upper cover (19), where all the power electronics are housed and protected, allowing for complete submersion.

4. Electricity-generating device by wave power, according to claim 3, **characterised in that** the auxiliary structure (17) is a mobile structure that allows the turbine to be raised and lowered, being equipped for this purpose with securing guides (17a) which are installed directly anchored to the breakwater, wheels incorporated within these guides, and a motorised system responsible for raising or lowering the assembly by means of tension cables.

5. Electricity-generating device using wave power, according to any of the preceding claims, **characterised in that** the buoy (16) comprises an upper mesh structure (14) and a lower mesh reinforcement structure (15) that ensure the centring of the main vertical axis (2) with respect to the centre of the buoy (16).

6. Electricity-generating device using wave force, according to claim 5, **characterised in that** the upper mesh structure (14) consists of a plurality of brackets (14a) arranged radially under the bell-shaped surface of the buoy (16), surrounding a central ring (14b) to which they are attached and to which the main vertical axis (2) is anchored.

7. Electricity-generating device using wave power, according to claim 5 or 6, **characterised in that** the lower mesh structure (15) comprises a plurality of cross-shaped arms (15a) fixed, at their distal end, to the ring (16a) on the lower edge of the buoy (16) by means of curved plates (15b) and, at their proximal end, to a central circular element (15c) which, in turn, is attached to the lower part of the vertical axis (2).

8. Electricity-generating device using wave power, according to any of the preceding claims, **characterised by** the fact that the blades (7) rotate 30 degrees on their axis to enable the propeller to maintain rotation during both the upward and downward movement of the water.

9. Wave-powered electricity-generating device, according to claim 8, **characterised by** the fact that the blades (7) are easily detachable individually for replacement, and for their attachment to the hub (4), a shaft (6) is incorporated into the blades, screwed at one end, whilst the other end is inserted into the hub (4) with radial bearings (11) and secured from the inside of the hub (4) by adding a cam (5) screwed onto the shaft (6) itself and a coaxial bearing (12) between the hub (4) and cam (5).

10. Electricity-generating device using wave power, according to claim 9, **characterised in that** the cam (5) features a protrusion (5a) which, upon rotating, strikes against guides formed by an upper plate of the hub (3) and a lower hub cover (8), both screwed to the hub (4), acting as a stop to define the 30-degree movement of the blades (7).

11. Electricity-generating device using wave force, according to claim 10, **characterised in that**, for the torque transmission from the hub (4) to the spindle (1), both elements are joined by a bolted connection using bolts (9, 10) at two points of the spindle (1) itself with said upper plate (3) and hub cover (8).

12. Electricity generating device by wave force, according to claim 11, **characterised in that** the connection between spindle (1) and hub (4) is made using four long disc bolts (9), which pass through said hub (4) and secure the vertical and rotational movement with the upper plate (3), and four short bolts (10) that secure the same movement in the lower cover (8) of the hub, all of which can be unscrewed from the base to facilitate the complete disassembly of the hub (4) from below.

13. Electricity-generating device by wave power, according to any of the preceding claims, **characterised in that**, as a means for securing the spindle (1) vertically, it comprises a tollok-type assembly ring (20) with a support disc (21) encased in respective radial (22) and axial (23) bearings.
